(19) Europäisches Patentamt
European Patent Office
Office européen des brevets

(11) Veröffentlichungsnummer: **0 019 859**
**B1**

(12) # EUROPÄISCHE PATENTSCHRIFT

(45) Veröffentlichungstag der Patentschrift: **16.03.83**

(51) Int. Cl.³: **C 08 G 18/77,** B 29 J 5/00, C 07 C 119/048, C 08 G 18/79, C 08 L 97/02

(21) Anmeldenummer: **80102851.5**

(22) Anmeldetag: **22.05.80**

(54) **Verwendung selbsttrennender Bindemittel auf Isocyanat-/Sulfonsäure-Basis zur Herstellung von Formkörpern.**

(30) Priorität: **29.05.79 DE 2921689**

(43) Veröffentlichungstag der Anmeldung: **10.12.80 Patentblatt 80/25**

(45) Bekanntmachung des Hinweises auf die Patenterteilung: **16.03.83 Patentblatt 83/11**

(84) Benannte Vertragsstaaten: **AT BE CH DE FR GB IT LI SE**

(56) Entgegenhaltungen:
**DE-A-2 441 843**
**DE-A-2 711 958**
**US-A-4 100 328**

(73) Patentinhaber: **BAYER AG, Zentralbereich Patente, Marken und Lizenzen, D-5090 Leverkusen 1, Bayerwerk (DE)**

(72) Erfinder: **Scholl, Hans-Joachim, Dr., Rudolf-Sohm-Strasse 28, D-5000 Köln 60 (DE)**
Erfinder: **Sachs, Hanns Immo, Semmelweisstrasse 149, D-5000 Koeln 80 (DE)**
Erfinder: **Jabs, Gert, Dr., Wingensieferkamp 25, D-5068 Odenthal (DE)**
Erfinder: **Loew, Günther, Dr., Neuenkamperweg 38, D-5653 Leichlingen (DE)**

EP 0 019 859 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Verwendung selbsttrennender Bindemittel auf Isocyanat-/Sulfonsäure-Basis zur Herstellung von Formkörpern

Die Erfindung betrifft die Verwendung praktisch wasserfreier Bindemittel auf Basis von Polyisocyanaten, welche durch Zusatz einer organischen Sulfonsäure so modifiziert sind, dass sie selbsttrennend wirken zur Herstellung von Formkörpern, insbesondere Platten, durch Heissverpressen verschiedenster organischer und/oder anorganischer Materialien, bevorzugt lignocellulosehaltiger Stoffe.

Presswerkstoffe wie z.B. Spanplatten, Verbundplatten oder andere Formkörper werden gewöhnlich so hergestellt, dass man das anorganische oder organische Rohmaterial, z.B. eine Masse aus Holzschnitzeln, Holzfasern oder anderem Lignocellulose enthaltenden Material, mit Bindemitteln, z.B. wässrigen Dispersionen oder Lösungen von Harnstoff/Formaldehyd- oder Phenol/Formaldehyd-Harzen, heiss verpresst. Es ist auch bekannt, als Bindemittel für Pressplatten anstelle von Formaldehydharzen Isocyanate bzw. Isocyanatlösungen zu verwenden (DE-AS 1 271 984; DE-OS 1 492 507; DE-OS 1 653 177; DE-OS 2 109 686). Die Verwendung von Polyisocyanaten als Bindemittel verbessert die Stabilität und das Feuchteverhalten der Produkte und erhöht deren mechanische Festigkeiten. Darüber hinaus besitzen Polyisocyanate als Bindemittel, wie es die DE-OS 2 109 686 offenbart, weitreichende verfahrenstechnische Vorteile.

Die grossindustrielle Herstellung von mit Polyisocyanaten gebundenen Materialien, insbesondere lignocellulosehaltigen Werkstoffen, wie z.B. Spanplatten, Faserplatten oder Sperrholz, wird jedoch durch die hohe Klebkraft der Polyisocyanate beeinträchtigt, welche dazu führt, dass die Formkörper nach der Heissverpressung an allen Metallteilen. insbesondere den Pressblechen aus Stahl oder Aluminium, stark haften und somit die Entformung erschweren.

Die bisher vorgeschlagenen Verfahren, dieses Trennproblem zu lösen, sind mit mehr oder minder grossen Nachteilen behaftet; so weisen speziell für Isocyanate entwickelte Trennmittel häufig zwar eine gute Trennwirkung auf, sind aber bei grosstechnischer Anwendung nicht sicher genug, unwirtschaftlich und können ausserdem bei der Weiterverarbeitung der Platten Fehlverleimungen oder Beschichtungsschwierigkeiten bewirken.

In der DE-OS 1 653 178 wird vorgeschlagen, bei der Herstellung von Platten oder Formkörpern durch Heissverpressen von Gemischen aus lignocellulosehaltigen Materialien und Polyisocyanaten die Pressbleche oder Pressformen vor dem Pressen mit Polyhydroxylverbindungen wie z.B. Glycerin, Ethylenglykol oder Polyester- bzw. Polyetherpolyolen zu behandeln. Nachteilig ist dabei, dass für das Aufbringen dieses Trennmittels ein eigener Arbeitsgang erforderlich ist und darüber hinaus ein Teil des Polyisocyanats durch Reaktion mit dem Trennmittel verbraucht wird. Eine andere Möglichkeit, das Trennverhalten der Formkörper zu verbessern, besteht gemäss DE-OS 2 325 926 darin, als Trennmittel solche Verbindungen zu verwenden, welche bei Isocyanaten eine Isocyanuratbildung katalysieren. Ein Nachteil dieser Arbeitsweise ist jedoch darin zu sehen, dass die Katalysatoren im Isocyanat destabilisierend wirken und somit die Herstellung eines spezifikationsgerechten Isocyanat-Bindemittels verhindern.

Der Erfindung liegt die Aufgabe zugrunde, die oben beschriebenen Nachteile bei der Formkörperherstellung mit Polyisocyanaten zu vermeiden und lagerfähige Bindemittel auf Isocyanatbasis zur Verfügung zu stellen, welche eine einwandfreie Entformbarkeit der Presskörper gewährleisten. Überraschenderweise wurde gefunden, dass diese Aufgabe gelöst werden kann, wenn man das Isocyanat in Kombination mit einer organischen Sulfonsäure einsetzt.

Gegenstand der Erfindung ist ein Verfahren zur Herstellung von Formkörpern durch Heissverpressen eines mit einer Isocyanatgruppen aufweisenden Verbindung als Bindemittel vermischten und/oder imprägnierten organischen und/oder anorganischen Materials unter Mitverwendung eines Mittels zur Trennung des Formkörpers von den Oberflächen der Pressform, welches dadurch gekennzeichnet ist, dass ein selbsttrennend wirkendes, im wesentlichen wasserfreies Bindemittel auf Polyisocyanatbasis verwendet wird, welches aus

A) einem Polyisocyanat und

B) einer praktisch wasserfreien Sulfonsäure der allgemeinen Formel

$$R-(-SO_3H)_n$$

besteht, in welcher

n für die ganzen Zahlen 1 oder 2, vorzugsweise für 1 steht, und

R einen aromatischen Kohlenwasserstoffrest mit 6 bis 14 Kohlenstoffatomen, einen aliphatischen Kohlenwasserstoffrest mit 10 bis 18 Kohlenstoffatomen, einen cycloaliphatischen Kohlenwasserstoffrest mit 6 bis 15 Kohlenstoffatomen, vorzugsweise jedoch einen araliphatischen Kohlenwasserstoffrest mit 7 bis 15 Kohlenstoffatomen oder einen alkaromatischen Kohlenwasserstoffrest mit 7 bis 24 Kohlenstoffatomen bedeutet, wobei das Äquivalentverhältnis der Komponenten A) und B) zwischen 100:0,5 und 100:20, vorzugsweise zwischen 100:1 und 100:5 liegt.

Besonders bevorzugt werden erfindungsgemäss zur Modifizierung der Isocyanatkomponente solche Sulfonsäuren der oben angegebenen allgemeinen Formel eingesetzt, bei welchen R für einen alkylsubstituierten Phenylrest mit insgesamt 9 bis 20 C-Atomen steht. Es ist jedoch auch möglich, als Trennmittel solche Sulfonsäuren der angegebenen Formel einzusetzen, bei welchen R zusätzlich inerte Substituenten, wie z.B. Halogen- oder Nitrogruppen, aufweist.

Spezifische Vertreter geeigneter Sulfonsäuren sind z.B. Dekansulfonsäure, Octadecansulfonsäure, Benzolsulfonsäure, Toluolsulfonsäure, Naphthalinsulfonsäure, Cyclohexansulfonsäure und insbesondere aromatische Monosulfonsäuren, wie sie durch Sulfonierung von Alkylbenzolen wie Hexylbenzol, Dodecylbenzol, Octadecylbenzol oder Gemischen daraus in an sich bekannter Weise zugänglich sind.

Aus der DE-OS 2 441 843 ist ein Verfahren zur Herstellung von modifizierten Polyisocyanaten bekanntgeworden, wobei man organische Polyisocyanate in einem Molverhältnis von 100:0,1 bis 100:50 mit einer 0,1 bis 5 Gew.-% Wasser enthaltenden organischen Sulfonsäure umsetzt, bis dem Reaktionsgemisch 50 bis 100% des bei der Umsetzung des gesamten Wassers mit den Isocyanatgruppen theoretisch zu erwartenden Kohlendioxids entwichen sind. Die so modifizierten Polyisocyanate werden als Isocyanatkomponente bei der Herstellung von hydrophilen Polyurethanschaumstoffen eingesetzt. Es findet sich jedoch kein Hinweis auf die Verwendung derartiger modifizierter Polyisocyanate als Bindemittel bei der Herstellung von Formkörpern. Ausserdem werden gemäss DE-OS 2 441 843 die Polyisocyanate gleichzeitig zu der Modifizierung mit Sulfonsäuren mit einer erheblichen Menge an Wasser zur Reaktion gebracht, was für die vorliegende Erfindung von Nachteil wäre, da hierdurch der Isocyanatgehalt des Bindemittels unnötig verringert würde. In den erfindungsgemässen, im wesentlichen wasserfreien Bindemittelkombinationen treten zwar bisher noch nicht voll aufgeklärte Adduktbildungen zwischen den Isocyanat- und den Sulfonsäuregruppen ein; es dürfte sich hierbei jedoch im wesentlichen um eine physikalische Assoziatbildung handeln, bei welcher der Gehalt an NCO-Gruppen (wenn auch möglicherweise zum Teil in verkappter Form) unverändert bleibt. Eine Kohlendioxid-Abspaltung ist nicht zu beobachten.

Als Isocyanatkomponente der erfindungsgemässen Bindemittelkombination kommen im Prinzip beliebige, vorzugsweise jedoch bei Raumtemperatur flüssige aliphatische, cycloaliphatische, araliphatische, aromatische und heterocyclische Polyisocyanate in Betracht, wie sie z.B. von W. Siefken in Justus Liebigs Annalen der Chemie, 562, Seiten 75 bis 136, beschrieben werden, beispielsweise solche der Formel

$$Q\ (NCO)_n$$

in der

n = 2–4, vorzugsweise 2, und

Q einen aliphatischen Kohlenwasserstoffrest mit 2–18, vorzugsweise 6–10 C-Atomen,

einen cycloaliphatischen Kohlenwasserstoffrest mit 4–15, vorzugsweise 5–10 C-Atomen,

einen aromatischen Kohlenwasserstoffrest mit 6–15, vorzugsweise 6–13 C-Atomen,

oder einen araliphatischen Kohlenwasserstoffrest mit 8–15, vorzugsweise 8–13 C-Atomen,

bedeuten, z.B. Äthylen-diisocyanat, 1,4-Tetramethylendiisocyanat, 1,6-Hexamethylendiisocyanat, 1,12-Dodecandiisocyanat, Cyclobutan-1,3-Diisocyanat, Cyclohexan-1,3- und -1,4-diisocyanat sowie beliebige Gemische dieser Isomeren, 1-Isocyanato-3,3,5-trimethyl-5-isocyanatomethyl-cyclohexan (DE-Auslegeschrift 1 202 785, US-Patentschrift 3 401 190), 2,4- und 2,6-Hexahydrotoluylendiisocyanat sowie beliebige Gemische dieser Isomeren, Hexahydro-1,3- und/oder -1,4-phenylendiisocyanat, Perhydro-2,4′ und/oder -4,4′-diphenylmethan-diisocyanat, 1,3- und 1,4-Phenylendiisocyanat, 2,4- und 2,6-Toluylendiisocyanat sowie beliebige Gemische dieser Isomeren, Diphenylmethan-2,4′- und/oder -4,4′-diisocyanat, Naphthylen-1,5-diisocyanat.

Ferner kommen beispielsweise erfindungsgemäss in Frage: Triphenylmethan-4,4′,4″-triisocyanat, Polyphenyl-polymethylenpolyisocyanate, wie sie durch Anilin-Formaldehyd-Kondensation und anschliessende Phosgenierung erhalten und z.B. in den GB-Patentschriften 874 430 und 848 671 beschrieben werden, m- und p-Isocyanatophenylsulfonyl-isocyanate gemäss der US-Patentschrift 3 454 606, perchlorierte Arylpolyisocyanate, wie sie z.B. in der DE-Auslegeschrift 1 157 601 (US-Patentschrift 3 277 138) beschrieben werden, Carbodiimidgruppen aufweisende Polyisocyanate, wie sie in der DE-Patentschrift 1 092 007 (US-Patentschrift 3 152 162) sowie in den De-Offenlegungsschriften 2 504 400, 2 537 685 und 2 552 350 beschrieben werden, Norbornan-Diisocyanate gemäss US-Patentschrift 3 492 330, Allophanatgruppen aufweisende Polyisocyanate, wie sie z.B. in der GB-Patentschrift 994 890, der BE-Patentschrift 761 626 und der NL-Patentanmeldung 7 102 524 beschrieben werden, Isocyanuratgruppen aufweisende Polyisocyanate, wie sie z.B. in der US-Patentschrift 3 001 973, in den DE-Patentschriften 1 022 789, 1 222 067 und 1 027 394 sowie in den DE-Offenlegungsschriften 1 929 034 und 2 004 048 beschrieben werden, Urethangruppen aufweisende Polyisocyanate, wie sie z.B. in der BE-Patentschrift 752 261 oder in den US-Patentschriften 3 394 164 und 3 644 457 beschrieben werden, acylierte Harnstoffgruppen aufweisende Polyisocyanate gemäss der DE-Patentschrift 1 230 778, Biuretgruppen aufweisende Polyisocyanate, wie sie z.B. in den US-Patentschriften 3 124 605, 3 201 372 und 3 124 605 sowie in der GB-Patentschrift 889 050 beschrieben werden, durch Telomerisationsreaktionen hergestellte Polyisocyanate, wie sie z.B. in der US-Patentschrift 3 654 106 beschrieben werden, Estergruppen aufweisende Polyisocyanate, wie sie z.B. in den GB-Patentschriften 965 474 und 1 072 956, in der US-Patentschrift 3 567 763 und in der DE-Patentschrift 1 231 688 genannt werden, Umsetzungsprodukte der obengenannten Isocyanate mit Acetalen gemäss der DE-Patentschrift 1 072 385 und polymere Fettsäureester enthaltende Polyisocyanate gemäss der US-Patentschrift 3 455 883.

Es ist auch möglich, die bei der technischen Isocyanatherstellung anfallenden, Isocyanatgruppen aufweisenden Destillationsrückstände, gegebenenfalls gelöst in einem oder mehreren der vorgenannten Polyisocyanate, einzusetzen. Ferner ist

es möglich, beliebige Mischungen der vorgenannten Polyisocyanate zu verwenden.

Besonders bevorzugt werden in der Regel die technisch leicht zugänglichen Polyisocyanate, z.B. das 2,4- und 2,6-Toluylendiisocyanat sowie beliebige Gemische dieser Isomeren («TDI»), Polyphenyl-polymethylen-polyisocyanate, wie sie durch Anilin-Formaldehyd-Kondensation und anschliessende Phosgenierung hergestellt werden («rohes MDI») und Carbodiimidgruppen, Urethangruppen, Allophanatgruppen, Isocyanuratgruppen, Harnstoffgruppen oder Biuretgruppen aufweisenden Polyisocyanate ("modifizierte Polyisocyanate"), insbesondere solche modifizierten Polyisocyanate, die sich vom 2,4- und/oder 2,6-Toluylendiisocyanat bzw. vom 4,4'- und/oder 2,4'-Diphenylmethandiisocyanat ableiten.

Als Isocyanatkomponente kommen darüber hinaus auch endständige NCO-Gruppen aufweisende Präpolymere mit einem mittleren Molekulargewicht von ca. 300 bis 2000 in Betracht, wie sie in an sich bekannter Weise durch Umsetzung von höhermolekularen und/oder niedermolekularen Polyolen mit einem Überschuss an Polyisocyanat erhalten werden. In diesem Zusammenhang geeignete höhermolekulare Polyole sind insbesondere 2 bis 8 Hydroxylgruppen aufweisende Verbindungen, speziell solche vom Molekulargewicht 400 bis 10 000, vorzugsweise 800 bis 5000, z.B. mindestens 2, in der Regel 2 bis 8, vorzugsweise aber 2 bis 4, Hydroxylgruppen aufweisende Polyester, Polyether, Polythioether, Polyacetale, Polycarbonate und Polyesteramide, wie sie für die Herstellung von homogenen und von zellförmigen Polyurethanen an sich bekannt sind:

a) Die in Frage kommenden Hydroxylgruppen aufweisenden Polyester sind z.B. Umsetzungsprodukte von mehrwertigen, vorzugsweise zweiwertigen und gegebenenfalls zusätzlich dreiwertigen Alkoholen mit mehrwertigen, vorzugsweise zweiwertigen, Carbonsäuren. Anstelle der freien Polycarbonsäuren können auch die entsprechenden Polycarbonsäureanhydride oder entsprechende Polycarbonsäureester von niedrigen Alkoholen oder deren Gemische zur Herstellung der Polyester verwendet werden. Die Polycarbonsäuren können aliphatischer, cycloaliphatischer, aromatischer und/oder heterocyclischer Natur sein und gegebenenfalls, z.B. durch Halogenatome, substituiert und/oder ungesättigt sein.

Als Beispiele für solche Carbonsäuren und deren Derivate seien genannt:

Bernsteinsäure, Adipinsäure, Korksäure, Azelainsäure, Sebacinsäure, Phthalsäure, Isophthalsäure, Trimellitsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, dimerisierte und trimerisierte ungesättigte Fettsäuren, gegebenenfalls in Mischung mit monomeren ungesättigten Fettsäuren, wie Ölsäure; Terephthalsäuredimethylester und Terephthalsäure-bis-glykolester. Als mehrwertige Alkohole kommen z.B. Äthylenglykol, Propylenglykol-(1,2) und -(1,3), Butylenglykol-(1,4) und -(2,3), Hexandiol-(1,6), Octandiol-(1,8), Neopentylglykol, 1,4-Bis-hydroxymethylcyclohexan, 2-Methyl-1,3-propandiol, Glycerin, Trimethylolpropan, Hexantriol-(1,2,6), Butantriol-(1,2,4), Trimethyloläthan, Pentaerythrit, Chinit, Mannit und Sorbit, Formit, Methylglykosid, ferner Diäthylenglykol, Triäthylenglykol, Tetraäthylenglykol und höhere Polyäthylenglykole, Dipropylenglykol und höhere Polypropylenglykole sowie Dibutylenglykol und höhere Polybutylenglykole in Frage. Die Polyester können anteilig endständige Carboxylgruppen aufweisen. Auch Polyester aus Lactonen, z.B. ε-Caprolacton, oder aus Hydroxycarbonsäuren, z.B. ω-Hydroxycapronsäure, sind einsetzbar.

b) Auch die erfindungsgemäss in Frage kommenden, mindestens zwei, in der Regel zwei bis acht, vorzugsweise zwei bis drei, Hydroxylgruppen aufweisenden Polyäther sind solche der an sich bekannten Art und werden z.B. durch Polymerisation von Epoxiden wie Äthylenoxid, Propylenoxid, Butylenoxid, Tetrahydrofuran, Styroloxid oder Epichlorhydrin mit sich selbst, z.B. in Gegenwart von Lewis-Katalysatoren wie $BF_3$, oder durch Anlagerung dieser Epoxide, vorzugsweise von Äthylenoxid und Propylenoxid, gegebenenfalls im Gemisch oder nacheinander, an Startkomponenten mit reaktionsfähigen Wasserstoffatomen wie Wasser, Alkohole, Ammoniak oder Amine, z.B. Äthylenglykol, Propylenglykol-(1,3) oder -(1,2), Trimethylolpropan, Glycerin, Sorbit, 4,4'-Dihydroxy-diphenylpropan, Anilin, Äthanolamin oder Äthylendiamin hergestellt. Auch Sucrosepolyäther, wie sie z.B. in den DE-Auslegeschriften 1 176 358 und 1 064 938 beschrieben werden, sowie auf Formit oder Formose gestartete Polyäther (DE-Offenlegungsschriften 2 639 083 bzw. 2 737 951) kommen erfindungsgemäss in Frage. Vielfach sind solche Polyäther bevorzugt, die überwiegend (bis zu 90 Gew.-%, bezogen auf alle vorhandenen OH-Gruppen im Polyäther) primäre OH-Gruppen aufweisen. Auch OH-Gruppen aufweisende Polybutadiene sind erfindungsgemäss geeignet.

c) Unter den Polythioäthern seien insbesondere die Kondensationsprodukte von Thiodiglykol mit sich selbst und/oder mit anderen Glykolen, Dicarbonsäuren, Formaldehyd, Aminocarbonsäuren oder Aminoalkoholen angeführt. Je nach den Co-Komponenten handelt es sich bei den Produkten z.B. um Polythiomischäther, Polythioäther: ester oder Polythioätheresteramide.

d) Als Polyacetale kommen z.B. die aus Glykolen, wie Diäthylenglykol, Triäthylenglykol, 4,4'-Dioxäthoxydiphenyldimethylmethan, Hexandiol und Formaldehyd herstellbaren Verbindungen in Frage. Auch durch Polymerisation cyclischer Acetale wie z.B. Trioxan (DE-Offenlegungsschrift 1 694 128) lassen sich erfindungsgemäss geeignete Polyacetale herstellen.

e) Als Hydroxylgruppen aufweisende Polycarbonate kommen solche der an sich bekannten Art in Betracht, die z.B. durch Umsetzung von Diolen wie Propandiol-(1,3), Butandiol-(1,4) und/oder

Hexandiol-(1,6), Diäthylenglykol, Triäthylenglykol, Tetraäthylenglykol oder Thiodiglykol mit Diarylcarbonaten, z.B. Diphenylcarbonat, oder Phosgen hergestellt werden können (DE-Auslegeschriften 1 694 080, 1 915 908 und 2 221 751; DE-Offenlegungsschrift 2 605 024).

f) Zu den Polyesteramiden und Polyamiden zählen z.B. die aus mehrwertigen gesättigten oder ungesättigten Carbonsäuren bzw. deren Anhydriden und mehrwertigen gesättigten oder ungesättigten Aminoalkoholen, Diaminen, Polyaminen und deren Mischungen gewonnenen, vorwiegend linearen Kondensate.

g) Auch bereits Urethan- oder Harnstoffgruppen enthaltende Polyhydroxylverbindungen sowie gegebenenfalls modifizierte natürliche Polyole, wie Rizinusöl oder Kohlenhydrate, z.B. Stärke, sind verwendbar. Auch Anlagerungsprodukte von Alkylenoxiden an Phenol-Formaldehyd-Harze oder auch an Harnstoff-Formaldehydharze sind erfindungsgemäss einsetzbar.

Geeignete niedermolekulare Polyole (Molekulargewicht 62 bis 400) sind z.B. die oben als Ausgangskomponenten für die Herstellung der höhermolekularen Polyole genannten Verbindungen.

Erfindungsgemäss bevorzugt werden, wie schon erwähnt, technische Polyphenyl-Polymethylen-Polyisocyanate als Isocyanatkomponente des Bindemittels eingesetzt. In diesem Zusammenhang hat es sich insbesondere bewährt (s. DE-OS 2 711 598) als Isocyanatkomponente das Phosgenierungsprodukt der nicht destillierten Bodenfraktion einzusetzen, wie sie bei der Entfernung von 25 bis 90 Gew.-%, vorzugsweise 30 bis 85 Gew.-%, an 2,2', 2,4'- und/oder 4,4'-Diaminodiphenylmethan aus einem Anilin/Formaldehyd-Kondensat entsteht, oder aber jene nicht destillierte Bodenfraktion einzusetzen, wie sie bei der Entfernung von 25 bis 90 Gew.-%, vorzugsweise 30 bis 85 Gew.-%, an 2,2'-, 2,4'- und/oder 4,4'-Diisocyanatodiphenylmethan aus dem rohen Phosgenierungsprodukt eines Anilin/Formaldehyd-Kondensats erhalten wurde, wobei das Polyisocyanat 35 bis 70 Gew.-%, vorzugsweise 45 bis 60 Gew.-%, an Diisocyanatodiphenylmethanen enthält, wobei der Gehalt an 2,4'-Diisocyanatodiphenylmethan zwischen 1 und 8 Gew.-%, vorzugsweise zwischen 2 und 5 Gew.-%, und der Gehalt an 2,2'-Diisocyanatodiphenylmethan zwischen 0 und 2 Gew.-% beträgt, und wobei das Polyisocyanat eine Viskosität bei 25 °C von 50 bis 600 mPas, vorzugsweise 200 bis 500 mPas, und einen NCO-Gehalt zwischen 28 und 32 Gew.-% aufweist.

Wie aus dem oben Gesagten hervorgeht, werden derartige Bodenfraktionen beispielsweise bei der Entfernung von 45 bis 90 Gew.-%, vorzugsweise 55 bis 85 Gew.-%, an 4,4'-Diisocyanato-diphenylmethan aus einem rohen Diphenylmethandiisocyanat erhalten, welches mehr als 85 Gew.-%, vorzugsweise mehr als 90 Gew.-%, an 4,4'-Diisocyanatodiphenylmethan enthält. Ein solches rohes Diphenylmethandiisocyanat ist beispielsweise nach dem Verfahren der DOS 2 356 828 zugänglich.

Eine andere Möglichkeit besteht darin, aus einem rohen Phosgenierungsprodukt mit einem Gehalt an Diisocyanatodiphenylmethanisomeren von 60 bis 90 Gew.-%, vorzugsweise 65 bis 75 Gew.-%, welches 20 bis 60, vorzugsweise 30 bis 40 Gew.-%, an 2,4'-Isomeren enthält, 25 bis 80 Gew.-%, vorzugsweise 30 bis 60 Gew.-%, an 2,4'-Diisocyanatodiphenylmethan und gegebenenfalls 4,4'- bzw. 2,2'-Diisocyanatodiphenylmethan abzudestillieren. In jedem Falle kann dabei die Destillation so geführt werden, dass der Rückstand die gewünschte Zusammensetzung aufweist.

Selbstverständlich ist es jedoch auch möglich (und in vielen Fällen in der Praxis auch einfacher), die gewünschte Isomeren- bzw. Oligomerenzusammensetzung des Polyphenyl-Polymethylen-Polyisocyanats durch Verschneiden verschiedener Bodenfraktionen zu erreichen.

Geeignete lignocellulosehaltige Rohstoffe, welche mit den erfindungsgemässen Bindemitteln gebunden werden können, sind beispielsweise Holz, Rinde, Kork, Bagasse, Stroh, Flachs, Bambus, Alfagras, Reisschalen, Sisal- und Kokosfasern. Selbstverständlich können erfindungsgemäss jedoch auch aus anderen organischen (z.B. Kunststoffabfällen aller Art) und/oder anorganischen Rohstoffen (z.B. Blähglimmer oder Silikatkugeln) Presskörper hergestellt werden. Das Material kann dabei in Form von Granulaten, Spänen, Fasern, Kugeln oder Mehl vorliegen und einen Feuchtigkeitsgehalt von z.B. 0 bis 35 Gew.-% aufweisen.

Es ist erfindungsgemäss möglich, aber weniger bevorzugt, die beiden Komponenten der Bindemittelkombination (Polyisocyanat bzw. Sulfonsäure) getrennt auf das zu bindende Material aufzubringen, wobei die Komponenten gegebenenfalls in einem inerten organischen Lösungsmittel gelöst sein können. Bevorzugt ist es jedoch, das Polyisocyanat in einem getrennten Arbeitsschritt mit der Sulfonsäure zu modifizieren. Die Sulfonsäure wird dabei in praktisch wasserfreier Form (bevorzugt mit einem Wassergehalt von weniger als 0,1 Gew.-%) eingesetzt, wie sie technisch anfällt. Auf 100 Äquivalente an Isocyanatgruppen werden dabei 0,5 bis 20 Äquivalente, vorzugsweise 1 bis 5 Äquivalente an Sulfonsäuregruppen angewandt. Die Vereinigung der Komponenten kann z.B. bei 10 bis 90 °C, vorzugsweise bei 20 bis 60 °C, gegebenenfalls in Anwesenheit eines inerten organischen Lösungsmittels, wie z.B. Kohlenwasserstoff-Fraktionen, erfolgen. Die so erhaltenen selbsttrennend wirkenden Bindemittelkombinationen sind lagerstabil und können zu einem beliebigen Zeitpunkt im erfindungsgemässen Verfahren eingesetzt werden.

Erfindungsgemäss wird das zu bindende organische und/oder anorganische Material mit dem Bindemittel in einer Menge von etwa 0,5 bis 20 Gew.-%, bevorzugt 2 bis 12 Gew.-%, bezogen auf Gesamtmasse des Formkörpers, versetzt und – im allgemeinen unter Einwirkung von Druck und Hitze (z.B. 70 bis 250 °C und 1 bis 150 bar) – zu Platten oder dreidimensional geformten Formkörpern verpresst.

In analoger Weise können auch mehrlagige Platten oder Formteile aus Furnieren, Papieren oder Geweben hergestellt werden, indem man die Lagen wie oben beschrieben mit dem Bindemittel behandelt und anschliessend – in der Regel bei erhöhter Temperatur und erhöhtem Druck – verpresst. Vorzugsweise werden Temperaturen von 100 bis 250 °C, besonders bevorzugt 130 bis 200 °C, eingehalten. Der Anfangspressdruck liegt vorzugsweise zwischen 5 bis 150 bar, im Laufe des Pressvorgangs fällt dann der Druck meist bis gegen 0 ab.

Erfindungsgemäss können die mit Sulfonsäuren modifizierten Polyisocyanate auch in Kombination mit den oben beschriebenen Polyhydroxylverbindungen in einem NCO/OH-Verhältnis zwischen 1,2:1 und 10:1, vorzugsweise 1,5:1 bis 1:1, als Bindemittel eingesetzt werden. Es ist dabei möglich, die beiden Komponenten getrennt oder als reaktives Gemisch einzusetzen. Praktische Bedeutung haben derartige Kombinationen von Polyisocyanat und Polyhydroxylverbindungen als Bindemittel z.B. bei der Bindung von Korkschrot. Es ist auch möglich, an sich bekannte Treibmittel in einer Menge von ca. 0,5 bis 30 Gew.-%, bezogen auf Binde- oder Imprägniermittel und/oder andere die Schaumbildung oder die chemische Reaktion zwischen Polyisocyanaten, lignocellulosehaltigem Material und gegebenenfalls Polyhydroxylverbindungen beeinflussende Additive wie Stabilisatoren, Katalysatoren und Aktivatoren in einer Menge von 0,05 bis 10 Gew.-%, bezogen auf Binde- bzw. Imprägniermittel, zuzusetzen.

Die erfindungsgemäss zu verwendenden Bindemittel können auch mit den in der Holzwerkstoffindustrie bisher überwiegend eingesetzten wässrigen Lösungen von Kodensationsprodukten aus Formaldehyd mit Harnstoff und/oder Melamin und/oder Phenol kombiniert werden, aber auch mit anderen, bisher weniger üblichen Binde- und Imprägniermitteln, wie z.B. auf Basis von Polyvinylacetat- oder anderen Kunststofflatices, Sulfitablauge oder Tannin, wobei ein Mischungsverhältnis der erfindungsgemässen mit diesen zusätzlichen Bindemitteln zwischen 1:20 und 20:1, vorzugsweise zwischen 1:5 und 5:1, eingehalten werden kann und wobei man die Polyisocyanatgemische und die zusätzlichen Bindemittel entweder separat oder auch in Mischung einsetzen kann.

Besonders vorteilhaft sind derartige Kombinationen bei der Herstellung von mehrschichtigen Platten mit speziellen Eigenschaften. Man kann z.B. die äusseren Schichten mit den erfindungsgemäss zu verwendenden Polyisocyanatgemischen (allein oder gemeinsam mit konventionellen Klebestoffen) und eine oder mehrere innere Schichten mit konventionellen Klebestoffen (allein oder gemeinsam mit den Polyisocyanatgemischen) versetzen und anschliessend miteinander verpressen.

Infolge ihrer hervorragenden mechanischen Eigenschaften sowie des günstigen Verhaltens bei Feuchtigkeitswechseln eignen sich die erfindungsgemäss hergestellten Platten oder Formteile auf Basis von lignocellulosehaltigen Rohstoffen vor allem für eine Verwendung im Bauwesen. Um den Platten oder Formteilen die hierfür im allgemeinen erforderliche Beständigkeit gegen Pilzbefall, Insektenfrass oder Feuereinwirkung zu verleihen, kann man den Bindemitteln die handelsüblichen organischen oder anorganischen Schutzmittel, in reiner Form oder als Lösung in einer Menge von ca. 0,05 bis 30 Gew.-%, vorzugsweise 0,5 bis 20 Gew.-%, bezogen auf lignocellulosehaltige Rohstoffe, zusetzen. Als Lösungsmittel kommen in Frage: Wasser oder organische Lösungsmittel, z.B. Rückstandsöle aus der Erdölaufarbeitung, Chlorkohlenwasserstoffe u.a. Die Verleimungsqualität wird hierdurch im allgemeinen nicht beeinträchtigt. Im Gegensatz zu Phenol/Formaldehyd-Harz-verleimten Platten treten bei den erfindungsgemäss hergestellten Werkstoffen dabei vorteilhafterweise weder Salzausblühungen noch «Ausbluten» ein.

Mit den erfindungsgemäss zu verwendenden Gemischen können im Vergleich zu herkömmlichen Bindemitteln auf Basis von Phenol/Formaldehyd- oder Harnstoff/Formaldehyd-Harzen bei der Spanplattenherstellung wesentliche Verbesserungen sowohl im Hinblick auf die mechanischen Eigenschaften als auch in verfahrenstechnischer Hinsicht erzielt werden. So ist es im Falle von Holzspanplatten möglich, entweder bei gleicher Bindemittelmenge wie bei Phenol/Formaldehyd- bzw. Harnstoff/Formaldehyd-Harzen eine bis zu 50% erhöhte Biegesteifigkeit (neben einer Verbesserung anderer mechanischer Eigenschaften) oder aber bei einer um 25 bis 70% erniedrigten Bindemittelkonzentration ein gleiches mechanisches Eigenschaftsbild zu erreichen. Diese optimalen Werkstoffeigenschaften werden insbesondere dann erzielt, wenn als Bindemittel ein Polyphenyl-Polymethylen-polyisocyanat mit der oben näher definierten Viskosität und Isomerenverteilung eingesetzt wird.

Es ist hierbei ohne Einfluss, ob das Polyisocyanatgemisch durch Abdestillieren von 2,4′- und/oder 4,4′-Diisocyanatodiphenylmethan aus rohem Diphenylmethandiisocyanat oder analog durch Abtrennen von reinem Diaminodiphenylmethan aus rohem Diaminodiphenylmethan und anschliessende Phosgenierung der so erhaltenen nicht destillierten Bodenfraktion aus Polyarylaminen hergestellt wurde.

Enthält das Polyisocyanat mehr als 75 Gew.% an Diisocyanatodiphenylmethanen, so wird das physikalische Werteniveau der Spanplatte wesentlich verschlechtert. Sinkt anderseits der Gehalt an Diisocyanatodiphenylmethanen auf unter 35 Gew.-%, so wird im allgemeinen das Bindemittel bei Raumtemperatur zu hoch viskos und kann auf den üblichen Beleimungsmaschinen mit dem lignocellulosehaltigen Rohstoff nicht mehr gleichmässig vermischt werden.

Die vorliegenden Beispiele erläutern die Erfindung. Wenn nicht anders vermerkt, sind Zahlenangaben als Gewichtsteile bzw. Gewichtsprozente zu verstehen.

In den Beispielen wurden die folgenden Polyisocyanatkomponenten eingesetzt:

A 1: Vom rohen Phosgenierungsprodukt eines Anilin/Formaldehyd-Kondensats wird so viel Diisocyanatodiphenylmethan abdestilliert, dass der Destillationsrückstand bei 25 °C eine Viskosität von 100 mPa.s aufweist (2-Kernanteil: 59,7%; 3-Kernanteil: 21,3%; Anteil an höherkernigen Polyisocyanaten: 19,0%).

A 2: Entsprechend hergestelltes Polyisocyanat mit einer Viskosität von 200 mPa.S bei 25 °C (2-Kernanteil: 44,3%; 3-Kernanteil: 23,5%; Anteil an höherkernigen Polyisocyanaten: 32,2%).

A 3: Entsprechend hergestelltes Polyisocyanat mit einer Viskosität von 400 mPa.s bei 25 °C (2-Kernanteil: 45,1%; 3-Kernanteil: 22,3%; Anteil an höherkernigen Polyisocyanaten: 32,6%).

A 4: Entsprechend hergestelltes Polyisocyanat mit einer Viskosität von 300 mPa.s bei 25 °C (2-Kernanteil: 56,8%; 3-Kernanteil: 27,6%; Anteil an höherkernigen Polyisocyanaten: 15,6%).

Als Sulfonsäure wurde in den Beispielen die technische Alkylbenzolsulfonsäure® MARLON® $AS_3$ (Handelsprodukt der Firma Chemische Werke Hüls AG) eingesetzt, welche durch Sulfonierung mit Schwefeltrioxid gewonnen wird.

Komponentenverteilung®:

| | | |
|---|---|---|
| $C_{10}$ | ca. 5 | Gew.-% |
| $C_{11}$ | ca. 45–50 | Gew.-% |
| $C_{12}$ | ca. 35–40 | Gew.-% |
| $C_{13}$ | ca. 1 | Gew.-% |

| Kennzahlen Gehalt an | |
|---|---|
| «Dodecylbenzolsäure» ® | 97–98% |
| Schwefelsäure | ca. 0,5% |
| Wasser | – |
| unsulfonierten Bestandteilen (Neutralöl) | 1,5–2% |
| Eisen | max. 3 mg/kg |
| Ni, Cr | max. 1 mg/kg |
| Titerwert ($cm^3$n-NaOH pro 10 Teile Säure) | 31–32 |
| Äquivalent (Teile Na-Salz pro 100 Teile Säure) | 103–105 |
| Dichte bei 50 °C | ca. 1,03 |
| Viskosität bei 50 °C | ca. 300 mPa.s |

Beispiel 1

900 g Polyisocyanat A 2 werden in einem Reaktionsgefäss vorgelegt. Bei 20 bis 30 °C lässt man unter Rühren innerhalb von 30 Minuten 100 g der Sulfonsäure zutropfen, rührt eine Stunde bei 50 °C nach und erhält ein Produkt mit einem NCO-Gehalt von 28,1% und einer Viskosität von 600 mPa.s/25 °C.

Entsprechend wurden die Produkte gemäss nachstehender Tabelle 1 hergestellt:

Tabelle 1

| Beispiel | Isocyanat (g) | Sulfonsäure (g) | Temp. (°C) | Nachrühren | NCO (Gew.-%) | Viskosität (mPa.s/25 °C) |
|---|---|---|---|---|---|---|
| 1 | 900 $A_2$ | 100 | 20–30 | 1 Std. 50 °C | 28,1 | 600 |
| 2 | 950 $A_4$ | 50 | 20–30 | 1 Std. 50 °C | 28,5 | 800 |
| 3 | 970 $A_2$ | 30 | 20–30 | 1 Std. 25 °C | 29,1 | 300 |
| 4 | 900 $A_2$ | 100 | 80 | 1 Std. 80 °C | 28,0 | 700 |
| 5 | 900 $A_1$ | 100 | 20–30 | 1 Std. 50 °C | 28,2 | 400 |
| 6 | 950 $A_2$ | 50 | 50 | 1 Std. 50 °C | 28,6 | 600 |
| 7 | 900 $A_4$ | 100 | 20–30 | 1 Std. 50 °C | 27,0 | 1500 |

Beispiel 8

3000 Teile eines industriell hergestellten Nadelholz/Laubholz-Spangemisches mit einem Feuchtigkeitsgehalt von 10% werden mit 164 Teilen des Produkts gemäss Beispiel 1 vermischt. Aus dem Material wird auf einem Stahl-Zulageblech ein Formling gebildet, der bei einer Heizplattentemperatur von 170 °C und einem Anfangsdruck von 25 bar 2 Minuten lang gepresst wird.

Man erhält eine Spanplatte, die sich spontan von dem Zulageblech und der Heizplatte löst und in ihren mechanischen Eigenschaften einer Spanplatte völlig äquivalent ist, welche mittels derselben Menge des nichtmodifizierten Isocyanats A 2 hergestellt wurde.

Beispiel 8 a: Vergleich

Alternativ wurde versucht, nach dem oben beschriebenen Verfahren eine Spanplatte mit dem nichtmodifizierten Isocyanat A2 herzustellen. Im Gegensatz zu oben hafteten die Zulagebleche so stark an der Spanplatte, dass die Zulagebleche nicht ohne Zerstörung der Spanplatte entfernt werden konnten.

Beispiel 9

12 000 Teile Holzspäne mit 9% Feuchtigkeitsgehalt werden mit 440 Teilen des Produkts aus Beispiel 2 benetzt. In einer Edelstahlform wird aus dem Material unter Druck und Hitze eine Transportpalette hergestellt, die sich nach dem Öffnen der Presse leicht entnehmen lässt und in ihren mechanischen Eigenschaften gegenüber einer mit einem konventionellen Harnstoff/Formaldehyd-Harz-Verleimten Palette deutlich überlegen ist.

Beispiel 10

3000 Teile zerkleinertes Weizenstroh werden mit einer Mischung aus 60 Teilen des Produkts aus Beispiel 3, 480 Teilen eines 65%igen wässrigen-Harnstoff/Formaldehyd-Harzes (1:1,4) und 20 Teilen einer 1%igen Lösung in Testbenzin des Insektenschutzmittels Hexachloroepoxioctahydroendo, exo-dimethanonaphthalin versetzt. Aus dem Material wird auf einem Zulageblech aus Aluminium mittels Windsichtung ein Formling gebildet, der bei 200 °C Heizplattentemperatur unter Druck ausgehärtet wird.

Man erhält eine Spanplatte, die einer handelsüblichen Holzspanplatte im allgemeinen ebenbürtig, in der Biege- und Kantenfestigkeit jedoch überlegen ist. Die Platte löst sich nach dem Pressvorgang spontan von Zulageblech und Heizplatte und ist gegen Zerstörung durch Insektenfrass geschützt.

Beispiel 11

1000 Teile Nadelholz-Deckschichtspäne mit einem Feuchtigkeitsgehalt von 20% werden mit 58 Teilen des Produkts aus Beispiel 4 benetzt. Daneben werden 2000 Teile Mittelschichtspäne, die mit 160 Teilen Wasser und 17 Teilen Kaliumhydrogenfluorid behandelt worden sind, mit 110 Teilen des nicht modifizierten Polyisocyanats A 3 benetzt. Aus den Materialien wird auf einem Stahlsieb ein dreischichtiger Formling gebildet und anschliessend bei 130 °C unter Druck ausgehärtet. Die entstandene Platte löst sich leicht von der Stahlsiebunterlage und der Heizplatte und weist neben ausgezeichneten Festigkeitseigenschaften eine lang andauernde Beständigkeit gegen den Angriff holzzerstörender Pilze auf.

Beispiel 12

5 Buchenfurniere von 1 mm Stärke mit einem Feuchtigkeitsgehalt von 7% werden in eine Mischung aus 95 Teilen des Produkts gemäss Beispiel 7 und 5 Teilen N-Methylpyrrolidon getaucht und nach kurzer Abtropfzeit kreuzweise übereinander zwischen Zulagebleche gelegt und bei 140 °C unter Druck ausgehärtet. Man erhält eine witterungsbeständige, vergütete Sperrholzplatte hoher Qualität, die sich nach der Verpressung ohne Schwierigkeiten von den Zulageblechen löst.

Beispiel 13

3000 Teile Blähglimmer mit einem Feuchtigkeitsgehalt von 8% werden mit 167 Teilen des Produkts nach Beispiel 5 benetzt. Hieraus wird auf einem Aluminium-Zulageblech ein Formling bebildet, der bei 150 °C unter Druck 8 Minuten lang verpresst wird. Man erhält eine feuerfeste Platte, die sich nach dem Pressvorgang gut von Zulageblech und Heizplatte löst.

**Patentansprüche**

1. Verfahren zur Herstellung von Formkörpern durch Heissverpressen eines mit einer NCO-Gruppen aufweisenden Verbindung als Bindemittel vermischten und/oder imprägnierten organischen und/oder anorganischen Materials unter Mitverwendung eines Mittels zur Trennung des Formkörpers von den Oberflächen der Pressform, dadurch gekennzeichnet, dass ein selbsttrennend wirkendes, im wesentlichen wasserfreies Bindemittel auf Polyisocyanatbasis verwendet wird, welches aus

A) einem Polyisocyanat und

B) einer praktisch wasserfreien Sulfonsäure der allgemeinen Formel

$$R-(-SO_3H)_n$$

besteht, in welcher

n für die ganzen Zahlen 1 oder 2 steht und

R einen aromatischen Kohlenwasserstoffrest mit 6 bis 14 C-Atomen, einen aliphatischen Kohlenwasserstoffrest mit 10 bis 18 C-Atomen, einen cycloaliphatischen Kohlenwasserstoffrest mit 6 bis 15 C-Atomen, einen araliphatischen Kohlenwasserstoffrest mit 7 bis 15 C-Atomen oder einen alkaromatischen Kohlenwasserstoffrest mit 7 bis 24 C-Atomen bedeutet,

wobei das Äquivalentverhältnis der Komponenten A) und B) zwischen 100:0,5 und 100:20 liegt.

2) Verfahren nach Anspruch 1, dadurch gekennzeichnet, dass Komponente B) des Bindemittels eine Sulfonsäure der angegebenen allgemeinen Formel ist, in welcher R für einen alkylsubstituierten Phenylrest mit insgesamt 9 bis 20 C-Atomen und n für die Zahl 1 steht.

3) Verfahren nach Anspruch 1 und 2, dadurch gekennzeichnet, dass Komponente A) des Bindemittels das Phosgenierungsprodukt der nichtdestillierten Bodenfraktion ist, wie sie bei der Entfernung von 25 bis 90 Gew.-% an 2,2'-, 2,4'- und/oder 4,4'-Diaminodiphenylmethan aus einem Anilin/Formaldehyd-Kondensat entsteht, oder aber jene nichtdestillierte Bodenfraktion ist, wie sie bei der Entfernung von 25 bis 90 Gew.-% an 2,2'-, 2,4'- und/oder 4,4'-Diisocyanatodiphenylmethan aus dem rohen Phosgenierungsprodukt eines Anilin/Formaldehyd-Kondensats erhalten wurde, wobei das Polyisocyanat 35 bis 70 Gew.-% an Diisocyanatodiphenylmethanen, davon 1 bis 8 Gew.-% 2,4'-Diisocyanatodiphenylmethan und 0 bis 2 Gew.-% an 2,2'-Diisocyanatodiphenylmethan, enthält, eine Viskosität bei 25 °C von 50 bis 600 mPas und einen NCO-Gehalt zwischen 28 und 32 Gew.-% aufweist.

4) Verfahren nach Anspruch 1 und 2, dadurch gekennzeichnet, dass Komponente A) des Bindemittels ein Polyisocyanat ist, welches durch Abdestillieren von 45 bis 90 Gew.-% 4,4′-Diphenylmethandiisocyanat aus einem rohen Diphenylmethandiisocyanat mit einem Gehalt von mehr als 85 Gew.-% an 4,4′ Diphenylmethandiisocyanat als Bodenfraktion erhalten wurde oder welches durch Phosgenierung der nichtdestillierten Bodenfraktion hergestellt wurde, wie sie beim Abdestillieren von 45 bis 90 Gew.-% an 4,4′-Diaminodiphenylmethan aus rohem Diaminodiphenylmethan mit einem Gehalt von mehr als 85 Gew.-% an 4,4′-Diaminodiphenylmethan entsteht.

5) Verfahren nach Anspruch 1 und 2, dadurch gekennzeichnet, dass Komponente A) des Bindemittels ein Polyisocyanat ist, welches durch Abdestillieren von 25 bis 80 Gew.-% an 2,4′- und gegebenenfalls 4,4′- bzw. 2,2′-Diisocyanatodiphenylmethan aus rohem Diphenylmethandiisocyanat mit einem Gehalt an Diisocyanatodiphenylmethanisomeren von 60 bis 90 Gew.-%, welches 20 bis 60 Gew.-% an 2,4′-Isomeren enthält, als Bodenfraktion erhalten wird oder welches durch Phosgenierung der nichtdestillierten Bodenfraktion hergestellt wird, wie sie beim Abdestillieren von 25 bis 80 Gew.-% an 2,4′- und gegebenenfalls 4,4′- bzw. 2,2′-Diaminodiphenylmethan aus rohem Diaminodiphenylmethan mit einem Gehalt von 60 bis 90 Gew.-% an Diaminodiphenylmethanisomeren entsteht, welches 20 bis 60 Gew.-% an 2,4′-Diaminodiphenylmethan enthält.

6) Verfahren nach Anspruch 1–5, dadurch gekennzeichnet, dass die Polyisocyanatkomponente und die Sulfonsäurekomponente des Bindemittels vorvermischt werden und das zu bindende organische und/oder anorganische Material mit diesem Gemisch behandelt wird.

**Claims**

1. Process for the production of shaped articles by hot pressing an organic and/or inorganic material mixed and/or impregnated with a compound containing NCO groups as binder using an agent for releasing the moulded article from the surfaces of the pressing mould, characterised in that a substantially anhydrous polyisocyanate-based binder with a self-releasing effect is used which consists of

A) a polyisocyanate and

B) a practically anhydrous sulphonic acid of the general formula

$$R \text{———} SO_3H)_n$$

in which

n represents the integers 1 or 2 and

R denotes an aromatic hydrocarbon radical with 6 to 14 C atoms, an aliphatic hydrocarbon radical with 10 to 18 C atoms, a cycloaliphatic hydrocarbon radical with 6 to 15 C atoms, an araliphatic hydrocarbon radical with 7 to 15 C atoms or an alkaromatic hydrocarbon radical having 7 to 24 C atoms, the equivalent ratio of the components A) and B) being between 100:0.5 and 100:20.

2. Process according to Claim 1, characterised in that component B) of the binder is a sulphonic acid of the indicated general formula, in which R represents an alkylsubstituted phenyl radical with a total of 9 to 20 C atoms and n represents the number 1.

3. Process according to Claims 1 and 2, characterised in that component A) of the binder is the phosgenation product of the undistilled bottom fraction of the type formed during the removal of from 25 to 90%, by weight, of 2,2′-, 2,4′- and/or 4,4′-diaminodiphenylmethane from an aniline/formaldehyde condensate, or is an undistilled bottom fraction of the type obtained during the removal of from 25 to 90%, by weight, of 2,2′-, 2,4′- and/or 4,4′-diisocyanatodiphenylmethane from the raw phosgenation product of an aniline/formaldehyde condensate, wherein the polyisocyanate contains from 35 to 70%, by weight, of diisocyanatodiphenylmethanes of which from 1 to 8%, by weight, are 2,4′-diisocyanatodiphenylmethane and from 0 to 2%, by weight, are 2,2′-diisocyanatodiphenylmethane, has a viscosity of from 50 to 600 mPas at 25 °C and an NCO content of between 28 and 32% by weight.

4. Process according to Claims 1 and 2, characterised in that component A) of the binder is a polyisocyanate which has been obtained by distilling from 45 to 90% by weight of 4,4′-diphenylmethane-diisocyanate from a raw diphenylmethane diisocyanate having a content of more than 85%, by weight, of 4,4-diphenyl methane diisocyanate as bottom fraction or which has been produced by phosgenation of the undistilled bottom fraction of the type produced during the distillation of from 45 to 90%, by weight, of 4,4′-diaminodiphenylmethane from crude diaminodiphenylmethane having a content of more than 85% by weight, of 4,4-diaminodiphenylmethane.

5. Process according to Claims 1 and 2, characterised in that component A) of the binder is a polyisocyanate which is obtained by distilling from 25 to 80%, by weight of 2,4′- and optionally 4,4′-, or 2,2′-diisocyanatodiphenylmethane from raw diphenylmethane diisocyanate having a content of diisocyanatodiphenylmethane isomers of from 60 to 90%, by weight, which contains from 20 to 60%, by weight, of 2,4′-isomers as bottom fraction or which is produced by phosgenation of the undistilled bottom fraction, of the type produced during the distillation of from 25 to 80%, by weight, of 2,4′- and optionally 4,4′- or 2,2′-diaminodiphenylmethane from raw diaminodiphenylmethane having a content of from 60 to 90%, by weight, of diaminodiphenylmethane isomers which contains from 20 to 60%, by weight, of 2,4′-diaminodiphenylmethane.

6. Process according to Claims 1–5, characterised in that the polyisocyanate component and the sulphonic acid component of the binder are mixed beforehand and the organic and/or inorganic material to be bonded is treated with this mixture.

**Revendications**

1. Procédé de fabrication de corps moulés par pressage à chaud d'un matériau organique et/ou

minéral mélangé et/ou imprégné avec un composé présentant des groupes NCO comme liant, avec utilisation conjointe d'un agent pour la séparation du corps moulé des surfaces du moule de pressage, caractérisé en ce qu'on utilise un agent liant essentiellement anhydre et à action autoséparatrice à base de polyisocyanate, qui consiste en

A) un polyisocyanate et en

B) un acide sulfonique pratiquement anhydre de formule générale

$$R-(-SO_3H)_n$$

dans laquelle
n représente les nombres entiers 1 ou 2 et
R représente un radical hydrocarboné aromatique ayant 6 à 14 atomes de carbone, un radical hydrocarboné aliphatique ayant 10 à 18 atomes de carbone, un radical hydrocarboné cycloaliphatique ayant 6 à 15 atomes de carbone, un radical araliphatique ayant 7 à 15 atomes de carbone ou un radical hydrocarboné alcoylaromatique ayant 7 à 24 atomes de carbone, le rapport d'équivalence des composants A) et B) se situant entre 100:0,5 et 100:20.

2. Procédé selon la revendication 1, caractérisé en ce que le composant B) du liant est un acide sulfonique de formule générale indiquée, dans laquelle R représente un radical phényle alcoylsubstitué ayant en tout 9 à 20 atomes de carbone et n représente le nombre 1.

3. Procédé selon les revendications 1 et 2, caractérisé en ce que le composant A) du liant est le produit de phosgénation de la fraction de queue non distillée comme celle que l'on obtient dans l'élimination de 25 à 90% en poids de 2,2'-, 2,4'- et/ou 4,4'-diaminodiphénylméthane à partir d'un condensat aniline/formaldéhyde, ou bien toute fraction de queue non distillée comme celle que l'on obtient dans l'élimination de 25 à 90% en poids de 2,2'-, 2,4'- et/ou 4,4'-diisocyanatodiphénylméthane à partir du produit de phosgénation brut d'un condensat aniline/formaldéhyde, le polyisocyanate contenant 35 à 70% en poids de diisocyanatodiphénylméthanes, dont 1 à 8% en poids de 2,4'-diisocyanatodiphénylméthane et 0 à 2% en poids de 2,2'-diisocyanatodiphénylméthane, présentant une viscosité à 25°C de 50 à 600 mPa.s et une teneur en NCO entre 28 et 32% en poids.

4. Procédé selon les revendications 1 et 2, caractérisé en ce que le composant A) du liant est un polyisocyanate qui a été obtenu comme fraction de queue par séparation distillatoire de 45 à 90% en poids de 4,4'-diphénylméthane-diisocyanate à partir d'un diphénylméthane-diisocyanate brut ayant une teneur de plus de 85% en poids en 4,4'-diphénylméthane-diisocyanate, ou bien qui a été préparé par phosgénation de la fraction de queue non distillée, comme celle que l'on obtient dans la séparation distillatoire de 45 à 90% en poids de 4,4'-diaminodiphénylméthane à partir de diaminodiphénylméthane brut ayant une teneur de plus de 85% en poids en 4,4'-diaminodiphénylméthane.

5. Procédé selon les revendications 1 et 2, caractérisé en ce que le composant A) du liant est un polyisocyanate qui est obtenu comme produit de queue par séparation distillatoire de 25 à 80% en poids de 2,4'- et éventuellement de 4,4'- ou 2,2'-diisocyanatodiphénylméthane à partir de diphénylméthane-diisocyanate brut ayant une teneur en isomères diisocyanatodiphénylméthane de 60 à 90% en poids, qui contient 20 à 60% en poids de l'isomère 2,4', ou bien qui est préparé par phosgénation de la fraction de queue non distillée, comme celle que l'on obtient dans la séparation distillatoire de 25 à 80% en poids de 2,4'- et éventuellement de 4,4'- ou 2,2'-diaminodiphénylméthane à partir d'un diaminodiphénylméthane brut ayant une teneur de 60 à 90% en poids en isomères diaminodiphénylméthane, qui contient 20 à 60% en poids de 2,4'-diaminodiphénylméthane.

6. Procédé selon les revendications 1 à 5, caractérisé en ce que le composant polyisocyanate et le composant acide sulfonique du liant sont prémélangés et en ce que le matériau organique et/ou minéral à lier est traité avec ce mélange.